# EUROPÄISCHE PATENTSCHRIFT

(11) **EP 2 050 697 B1**
(45) Veröffentlichungstag und Bekanntmachung des Hinweises auf die Patenterteilung: **05.06.2013**
(21) Anmeldenummer: 08018103.5
(22) Anmeldetag: 16.10.2008
(51) Int. Cl.: B65G 35/00

(54) **Fördervorrichtung zum Transportieren, Sortieren und/oder Handhaben von Objekten**
Conveyor for transporting, sorting and/or handling objects
Dispositif de transport destiné à transporter, trier et/ou manipuler des objets

(30) Priorität: 16.10.2007 DE 102007049734
(43) Veröffentlichungstag der Anmeldung: 22.04.2009
(73) Patentinhaber: Gerthsen, Melf, 24351 Damp (DE); Bruns, Rainer, 22395 Hamburg (DE)
(72) Erfinder: Gerthsen, Melf, 24351 Damp (DE); Bruns, Rainer, 22395 Hamburg (DE)
(74) Vertreter: Hausfeld, Norbert

(56) Entgegenhaltungen:
- DE-A1-102006 013 337
- JP-A- 11 236 113
- SU-A1- 1 713 867
- US-B1- 6 595 350

## Beschreibung

In logistischen Systemen werden Objekte im Raum bewegt. Solche Objekte können z.B. Gegenstände, Teile, Waren, Pakete, Paletten, Kisten oder beliebige andere Fördergüter sein. Je nach dem Zweck dieser Bewegungen werden die folgenden logistischen Funktionen unterschieden: Transportieren, Sortieren, Handhaben.

Der Zweck des Transportierens besteht darin, Objekte von einem Ausgangsort zu einem Zielort zu verbringen. Hierfür werden verschiedene technische Geräte verwendet, die insgesamt als Fördermittel bezeichnet werden. Es gibt z.B. Fördermittel, die auf einer Verkehrsfläche oder innerhalb gewisser Grenzen frei verfahrbar sind. Zu diesen frei verfahrbaren Fördermitteln zählen insbesondere die Flurförderzeuge (Gabelstapler und ähnliche Geräte) und die Krane. Sie werden vorwiegend für den Transport größerer Objekte sowie zu größeren Ladungseinheiten zusammengefasster Objekte eingesetzt. Frei verfahrbare Fördermittel besitzen den großen Vorteil, dass Sie außerordentlich flexibel zum Transportieren und auch zum Sortieren und Handhaben von Objekten verwendet werden können. Hierzu müssen jedoch komplexe Steuerungsaufgaben durch einen Bediener (Fahrer) gelöst werden, was zu hohen Personalkosten für den Betrieb führt. Deshalb werden insbesondere für den Transport großer Mengen von Objekten in der Industrie, im Handel und im Dienstleistungsgewerbe häufig Fördermittel eingesetzt, mit denen die Objekte entlang einer fest vorgegebenen Bahn bewegt werden. Solche Fördermittel sind z.B. Kettenförderer, Rollenbahnen, Elektrohängebahnen, Schwingrinnen, Bandförderer, Rutschen usw.. Um mit diesen Fördermitteln mit festgelegten Bewegungsbahnen Transportnetzwerke mit mehreren Ausgangsorten und mehreren Zielorten aufbauen zu können, werden zusätzlich technische Geräte wie z. B. Drehtische, Schiebeweichen und Abschieber zum Verzweigen, Zusammenführen und Kreuzen von Förderstrecken benötigt.

Beim Sortieren werden verschiedene Objekte von einem gemeinsamen Ausgangsort zu verschiedenen objektspezifischen Zielorten transportiert. Bei heutigen Sortieranlagen geschieht dieses, indem alle Objekte zunächst entlang einer umlaufenden Förderstrecke transportiert werden, die an allen Zielorten vorbeiführt. Kommt ein Objekt an seinem Zielort vorbei, so wird es aus der umlaufenden Förderstrecke ausgeschleust und die Reststrecke zum Zielort zum Beispiel mit Hilfe einer einfachen Rutsche transportiert. Zum Ausschleusen der Objekte aus der umlaufenden Förderstrecke werden Kippschalen, Abschieber, Abstreifer, angetriebene Querbandförderer oder ähnliche technische Einrichtungen verwendet.

Unter dem Handhaben von Objekten versteht man die Herstellung und Aufrechterhaltung einer definierten räumlichen Position und Orientierung der Objekte. Hierfür werden entweder sehr speziell an die jeweiligen Objekte angepasste technische Geräte oder universell einsetzbare Handhabungsroboter mit komplexer Objekterkennung und Steuerung verwendet.

Die genannten technischen Geräte zum Transportieren, Sortieren und Handhaben sind in der Fachliteratur ausführlich beschrieben.

Nachteilig an diesem Stand der Technik ist, dass für eine Verkettung der logistischen Funktionen Transportieren, Sortieren und Handhaben entweder Menschen oder ein hoher technischer Aufwand erforderlich sind. Die Verknüpfung der logistischen Funktionen durch Menschen führt zu einem hohen Personaleinsatz und damit zu hohen Personalkosten. Eine technische Umsetzung bedingt eine Vielzahl unterschiedlicher fördertechnischer Geräte, die sowohl über physische Schnittstellen als auch steuerungstechnisch miteinander verknüpft werden müssen. Weiterhin sind Änderungen der Transportwege meist nur durch große technische Veränderungen realisierbar und daher nicht kurzfristig und nur mit großem Aufwand möglich.

Aus dem deutschen Gebrauchsmuster G 9108137.8 ist ein Wellenförderer zum Fördern von Schüttgut bekannt, der das zu fördernde Schüttgut von einer Aufgabe- zu einer Abgabestation auf einem festen Förderweg in einem das Fördergut vollständig umhüllenden Schlauch bewegt. Auf- und Abgabepunkt sind dabei fest vorgegeben. Ein anderer als der vorgegebene Förderweg oder andere logistische Funktionen lassen sich mit dieser Konstruktion nicht realisieren.

Aus dem deutschen Patent 610732 ist ein Wellenförderer bekannt, der ebenfalls nur zu einem festgelegten Förderweg befähigt ist. Unterhalb eines von einem Aufgabe- zu einem Abgabepunkt verlaufenden Förderbandes sind in festen Abständen rotierende Hubarme angeordnet, die das Förderband rhythmisch anheben und absenken. Auch mit dieser Vorrichtung lassen sich keine komplexen Transportbewegungen ausführen, andere logistische Funktionen sind ebenfalls nicht möglich.

Die gattungsgemäβe JP 11-236113 A zeigt einen Linearförderer, bei dem die Förderung durch eine wellenförmige Bewegung des Förderbandes erfolgt.

Die DE 10 2006 013 337 A1 zeigt eine Vorrichtung, mit der in der von einem Array von Aktoren aufgespannten Ebene Objekte nach einem Pilgerschrittverfahren bewegt werden können.

Die Aufgabe der vorliegenden Erfindung besteht darin, eine neue Fördervorrichtung und ein neues Förderverfahren zu schaffen. Die neue Fördervorrichtung soll dabei flexibel einsetzbar und schnell für geänderte Aufgaben anpassbar sein.

Diese Aufgabe wird gelöst mit der erfindungsgemäβen Fördervorrichtung nach Anspruch 1. Weitere vorteilhafte Ausgestaltungen sind Gegenstand der Unteransprüche.

Das grundlegende Prinzip besteht darin, daß eine elastische Fördermembran durch unterhalb der Membran angeordnete Stellelemente derart verformt wird, dass in der Oberfläche der Membran eine Erhebung (Welle) oder eine Absenkung (Senke) entsteht. Diese Auslenkung der Membran pflanzt sich über die Membranoberfläche fort, die Welle bzw. Senke wandert. Das zu transportierende oder zu drehende Objekt wird dabei von der Bewegung der Oberflächenwelle bzw. -senke mitgenommen. Zur gezielten Deformation der Membran und zur Bewegung dieser Deformation werden die Stellelemente örtlich und zeitlich abgestimmt von einer Steuereinrichtung angesteuert. Die Steuereinrichtung ist z.B. so ausgebildet, daß zeitlich nacheinander Steuerbefehle so an die Stellelemente gegeben werden, daß die erzeugte Welle oder Senke lineare, gekrümmte oder drehende Bewegungen ausführt. Bei der Förderung von Objekten rutschen diese auf der Fördermembran. Es ist deshalb vorteilhaft, dass die Oberfläche der Fördermembran reibungsarm und verschleißfest ausgeführt ist. Die Membran kann dazu z.B. aus einem reibungsarmen Material hergestellt sein, eine die Reibung vermindernde Beschichtung aufweisen oder zu den gleichen Zwecken mit feinen Borsten, Haaren oder oberflächensttukturiert ausgeführt sein.

Komplexe Bewegungen wie Drehungen oder Bewegungen in verschiedene Richtung sind dadurch möglich, dass die Stellelemente mit Vorteil auf Gitterpunkten eines Gitters im wesentlichen gleichmäßig über die Fläche der Membran verteilt angeordnet sind. Es lassen sich dadurch nicht nur Bewegungen in beliebiger Richtung ausführen, sondern auch Drehbewegungen, weil nunmehr zwei Freiheitsgrade in der örtlichen Ansteuerung der Stellelemente zur Verfügung stehen. Es lassen sich dadurch nicht nur unterschiedlich geformte Wellenverläufe erzeugen, z.B. gekrümmte Wellenverläufe, diese können auch in unterschiedliche Richtungen in der Förderebene laufen und drehende Bewegungen ausführen. Je mehr Stellelemente dabei vorgesehen werden, desto feiner lassen sich Wellenverlauf und Wellenbewegung steuern. Es steigt allerdings auch der Steueraufwand, der aber dadurch verringert werden kann, daß Stellelemente z.B. gruppenweise angesteuert werden, z.B. eine ganze Spalte von Stellelementen in gleicher Weise, oder in der Steuereinrichtung können typische Wellenformen und Wellenbewegungen für die verschiedenen vorgesehenen Transport-, Sortier- und Handhabungsfunktionen in einem Speicher hinterlegt sein und bei Bedarf abgerufen werden. Dies gilt natürlich analog für Senken. In Verbindung mit dem zeitlichen Freiheitsgrad kann die Steuereinrichtung beliebige zweidimensionale Bewegungsmuster der Welle bzw. Senke realisieren. Unter der Bezeichnung Steuereinrichtung soll dabei der gesamte steuernde Teil der Fördervorrichtung verstanden sein, der z.B. mehrere Rechnereinheiten oder mehrere Steueruntereinheiten aufweisen kann.

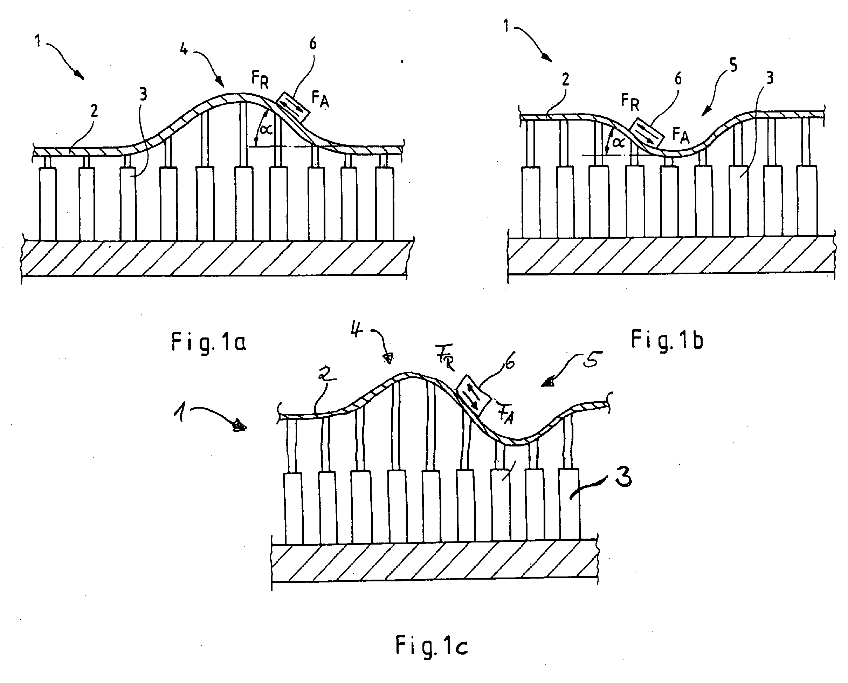

Es ist auch möglich, dass eine Kombination aus Welle und Senke erzeugt wird, siehe dazu Fig. 1c.

Die Fördermembran kann z.B. mit einer Neigung angeordnet sein, so daß sich die zu fördernden Objekte bereits aufgrund der Gravitation in Richtung der Neigung bewegen können, wenn die Reibungskraft nicht größer als die in Neigungsrichtung wirkende Gravitationskraft ist. Die von einer Welle oder Senke in der Membran zu erbringende Transportarbeit läßt sich dadurch verringern. Eine solche geneigte Anordnung der Membran könnte z.B. für die Anwendung der Vorrichtung für Sortieraufgaben vorteilhaft sein. Die Stellelemente könnten dann z.B. im wesentlichen nur noch für ein Abbremsen oder zusätzliches Beschleunigen der Objekte sorgen. Wenn die Objekte z.B. bereits alleine aufgrund der Neigung auf der Membran in die Neigungsrichtung rutschen, dann könnten die Stellelemente z.B. für eine Ablenkung der rutschenden Objekte in verschiedene Richtungen auf ihrem Weg entlang der geneigten Membran angesteuert werden. Vorteilhaft ist die Membran aber nicht geneigt, sondern die Förderebene der Fördermembran erstreckt sich im wesentlichen horizontal. Objekte können dadurch in beliebiger Richtung bewegt werden, ohne daß eine der Richtungen gegenüber anderen Richtungen bevorzugt wäre. Dabei kann die vorrichtung z.B. so ausgeführt sein, daß die Fördermembran aus einer geneigten in eine horizontale Position verfahrbar ist und umgekehrt. Sie kann dazu z.B. in einem höhenverstellbaren Gestell gehalten sein.

Mit den vorteilhaften Merkmalen des Anspruchs 3 sind vertikale Bewegungen des Fördergutes möglich, so daß Übergabestellen auf unterschiedlichen Höhenebenen erreichbar sind. Es wird eine Vervielfachung der möglichen Übergabestellen erreicht. Die Steuereinrichtung steuert dazu z.B. eine am Rand der Membran angeordnete Gruppe von Aktoren so an, dass diese synchron ausfahren. Auch für diesen Modus kann z.B. eine entsprechende Steuerroutine in einem Speicher hinterlegt sein.

Vorteilhaft werden nach Anspruch 4 alle Stellelemente baugleich ausgeführt. Die Steuerung ist dann für alle Stellelemente gleich, der Gesamtsteuerungsaufwand ist dadurch geringer.

Die Stellelemente können z.B. beliebige Aktoren sein, wie z.B. elektromagnetische, piezoelektrische, pneumatische oder hydraulische Linearaktoren, deren Länge sich in Abhängigkeit von einem Steuersignal verändert. Es sind auch Aktoren mit anderen Bewegungen denkbar, die zu der gewünschten Auslenkung der Membran führen, also z.B. drehende Aktoren. Wegen der großen Anzahl der benötigten Aktoren ist es vorteilhaft, möglichst einfach aufgebaute und somit kostengünstige Aktoren einzusetzen. Geeignete Aktoren sind deshalb insbesondere einseitig wirkende Aktoren gemäß Anspruch 5, die nur aktiv ein- oder ausfahren (ihre Länge verändern), aber nicht wieder aktiv in den Ausgangszustand zurückkehren.

Die Rückstellung der einseitig wirkenden Aktoren könnte z.B. durch die Elastizität und das Gewicht der Membran erfolgen, was eine gewisse Trägheit bedingt. Mit Vorteil werden deshalb die einseitig wirkenden Aktoren durch Rückstellkräfte wieder in den Ausgangszustand gebracht. Dazu greifen nach Anspruch 6 elastische Elemente an der Fördermembran an, die bei einer Auslenkung der Fördermembran eine rückstellende Kraft erzeugen. Solche elastischen Elemente könnten z.B. metallische Federn oder Federn aus einem Elastomer sein, die bei Betätigung eines Aktors zusammengedrückt oder elongiert werden, und bei Abschalten des Aktors diesen wieder in seine Ausgangsstellung zurückstellen. Die Federkraft sollte dabei so gewählt werden, daß die rückstellende Kraft eine ausreichend schnelle Rückkehr der Membran in seine Ruhestellung bewirkt.

Da die Fördermembran aus einem elastischen Material besteht, hat sie die Tendenz zwischen den Stellen, an denen sie gehalten wird, durchzuhängen. Es kann deshalb notwendig sein, die Membran an den Rändern und an über der Fläche der Membran verteilten Stützstellen abzustützen, z.B. zwischen den Stellelementen, um ein störendes Durchhängen zu vermeiden. Vorteilhaft liegt die Membran nach Anspruch 7 in Ruhestellung allerdings auf den Stellelementen auf, die also gleichzeitig als Stützen der Membran wirken. Weitere über die Fläche verteilte Stützmittel werden dann nicht benötigt.

Die Fördermembran wird besonders an denjenigen Stellen besonders beansprucht, an denen die Stellelemente angreifen. Es ist deshalb nach Anspruch 8 von Vorteil, die Fördermembran im Kontaktbereich mit den Stellelementen dicker auszubilden als in den dazwischen liegenden Bereichen. Die Membran erhält dadurch mehr Stabilität, behält aber die benötigte Elastizität.

Die Anforderungen an die Fördermembran sind vielfältig. Es ist deshalb nach Anspruch 9 vorteilhaft, die Fördermembran mehrschichtig aufzubauen, wobei sie wenigstens aus einer verschleißfesten und reibungsarmen Oberschicht und einer elastischen Trägerschicht besteht. Es können dazu jeweils besonders geeignete Materialien ausgewählt werden. Die Membran kann auch aus mehr als zwei Schichten bestehen. So kann z.B. eine weitere besonders reissfeste Schicht vorgesehen sein.

Trotz sorgfältiger Materialauswahl kann es zu Verschleißerscheinungen an der Fördermembran kommen. Zum Zwecke eines Austausches ist es nach Anspruch 10 vorteilhaft, wenn die Schichten der Fördermembran lösbar miteinander verbunden und einzeln austauschbar ausgeführt sind.

Eine besonders einfache und kostengünstige Ausgestaltung stellen mittels Druckluft arbeitende Stellelemente dar, die über eine Druckluftversorgungseinrichtung mit Druckluft versorgt werden. Die Steuereinrichtung steuert dabei z.B. den Zustrom und den Abfluß der Druckluft in die Stellelemente über Steuerventile. Eine besonders geeignete Bauart von Stellelementen besteht nach Anspruch 12 darin, die Stellelemente als Hohlräume in einem elastischen Material auszuführen, in die über von der Steuereinrichtung beherrschte Steuerventile Druckluft einleitbar ist. Die Hohlräume dehnen sich bei Zustrom von Druckluft aus, das elastische Material sorgt selbsttätig für eine Rückstellung, sobald die eingespeiste Druckluft gegen den Atmosphärendruck wieder frei entweichen kann. Weiterhin vorteilhaft ist es nach Anspruch 13, die Hohlräume als Faltenbälge auszubilden. Die Faltenbälge sorgen dafür, daß die Drucklufteinleitung im wesentlichen nur eine Längenänderung der Hohlräume bewirkt, während sich der Hohlraum nicht radial erweitern kann. Die eingesetzte Energie wird dadurch effektiver in eine Längenänderung umgesetzt.

Bei mit Druckluft arbeitenden Stellelementen ist mit Vorteil vorgesehen, daß die Fördermembran Ausblasdüsen aufweist, die von der Druckluftversorgungseinrichtung mit Druckluft versorgt sind. Die Objekte gleiten dann leichter auf der Membranoberfläche.

Auch eine Vibration der Membran verringert die Reibung der Objekte auf der Membranoberfläche. Es sind deshalb vorteilhaft Vibrationsmittel zur Erzeugung einer zumindest bereichsweisen Vibration der Membran vorgesehen. In besonders vorteilhafter Weise können dabei die Stellelemente die Vibrationsmittel bilden. In Alternative oder ergänzend dazu könnte z.B. auch ein die Membran tragendes Gestell oder ein nur die Aktoren tragendes Gestell Vibrationen ausführend ausgebildet sein. Gerade beim gleichzeitigen Transport von mehreren Objekten kann diese Ausgestaltung bevorzugt sein, um die Aufstandskräfte zu verringern. Vorteilhaft ist dabei eine Anregung des Gestells in seiner Eigenfrequenz, um die notwendige Leistung zur Anregung und Aufrechterhaltung der Schwingung gering zu halten.

Für das Bewegen unterschiedlich schwerer Objekte sind unterschiedliche Kräfte aufzubringen. Es ist deshalb von Vorteil, die Stellelemente in der Amplitude ihrer Auslenkung steuerbar auszubilden. Die Auslenkung kann dann z.B. für leichte Objekte geringer sein als für schwere Objekte.

Eine objektindividualisierte Steuerung setzt eine Objekterfassung voraus. Deshalb sind vorteilhaft Objekterfassungsmittel zur Erfassung insbesondere von Art, Größe und/oder Lage zu fördernder Objekte vorgesehen, die kommunizierend mit der Steuereinrichtung verbunden sind. Eine solche Objekterfassung kann z.B. optisch über Bildaufnahme und Bildauswertung erfolgen. Bei markierten Objekten kann auch eine Markierungserkennung erfolgen, z.B. das Lesen von Strichcodes oder von Tags. Der Vorteil besteht darin, daß die Fördervorrichtung dann beliebige Objekte mit sehr unterschiedlichen Größen, Formen und Gewichten problemlos verarbeiten kann, da z.B. Größe, Form und Bewegung der Auslenkung der Membran angepaßt werden können an das jeweilige Objekt. In Alternative dazu könnte der Fördervorrichtung auch eine Information zu den Objekten bei Übergabe durch eine vorgeschaltete Vorrichtung übermittelt werden.

Für den Einsatz der Fördervorrichtung zusammen mit anderen Vorrichtungen, die z.B. vorgeschaltet oder nachgeschaltet sein könnten, weist die Steuereinrichtung mit Vorteil eine Schnittstelle auf, über die die Fördervorrichtung mit anderen Fördervorrichtungen oder beliebigen anderen Fördermitteln verbindbar ist.

Die vorstehend erläuterte Fördervorrichtung ist aus einfachen Grundelementen aufgebaut, was zu geringen Herstellungskosten und einem geringen Wartungsaufwand führt. Ohne Änderung des technischen Aufbaus können die Funktionen und Aufgaben schnell geändert und den jeweiligen Erfordernissen angepasst werden. Damit kann die erfindungsgemäße Vorrichtung, insbesondere mit den Merkmalen der Unteransprüche, für verschiedene logistische Funktionen verwendet werden. Die Verkettung mehrerer erfindungsgemäßer Vorrichtungen oder die Verkettung bekannter Vorrichtungen mit einer oder mehreren erfindungsgemäßen Vorrichtungen ermöglicht ein modular aufgebautes Logistiksystem, das schnell und flexibel an veränderte Anforderungen der Förderung angepasst werden kann. Weiterhin erfolgen die Handhabung und der Transport der Objekte schonend und es ist auch möglich, die Erfindung für sehr kleine Objekte einzusetzen.

Die Erfindung soll nachfolgend anhand der in den Figuren schematisch dargestellten Ausführungsbeispiele weiter erläutert werden. Es zeigen:
- Fig. 1a, 1b, 1c: in schematischer Darstellung das Funktionsprinzip einer erfindungsgemäßen Fördervorrichtung in einer Seitenansicht;
- Fig. 2a, 2b: in schematischer Darstellung den Transport eines Objektes auf einer erfindungsgemäßen Fördervorrichtung in einer Schrägaufsicht;
- Fig. 3: in schematischer Darstellung die Handhabung eines Objektes mit einer erfindungsgemäßen Fördervorrichtung in einer Schrägaufsicht;
- Fig. 4: den Aufbau einer erfindungsgemäßen Vorrichtung in einem Funktionsdiagramm;
- Fig. 5: ein erstes Ausführungsbeispiel einer erfindungsgemäßen Fördervorrichtung in einer geschnittenen Seitenansicht;
- Fig. 6: ein zweites Ausführungsbeispiel einer erfindungsgemäßen Fördervorrichtung in einer geschnittenen Seitenansicht;
- Fig. 7: ein drittes Ausführungsbeispiel einer erfindungsgemäßen Fördervorrichtung in einer geschnittenen Seitenansicht;
- Fig. 8: ein viertes Ausführungsbeispiel einer erfindungsgemäßen Fördervorrichtung in einer geschnittenen Seitenansicht.

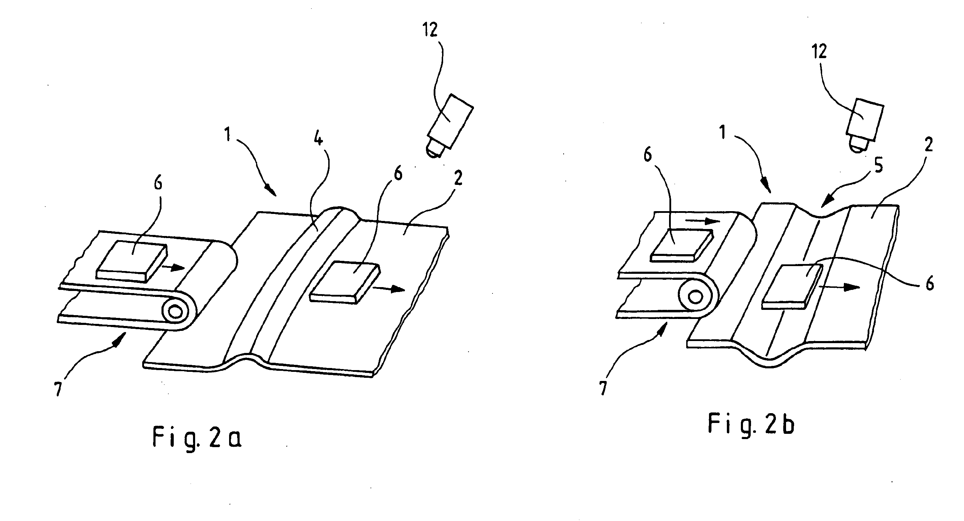

Das Grundprinzip der Fördervorrichtung 1 und eines damit möglich gewordenen Förderverfahrens ist in den Figuren 1a, 1b und 1c sowie 2a und 2b dargestellt. Eine im gezeigten Beispiel im wesentlichen horizontal angeordnete elastische Membran 2 wird durch darunter angeordnete Stellelemente 3 derart ausgelenkt, daß sich eine Erhebung in Form einer gebogenen Welle 4 oder eine Absenkung in Form einer Senke 5 ausbildet. Gemäß Figur 1c können auch gleichzeitig eine Welle 4 und eine Senke 5 erzeugt werden, so dass das bewegte Objekt z.B. besonders gut geführt ist. Wie in den Abbildungen 2a und 2b dargestellt bewegen sich die Welle 4 bzw. die Senke 5, oder beide zusammen, über die Oberfläche der Membran 2. Die dafür verantwortlichen Aktoren sind dabei in den Figuren 2a und 2b nicht dargestellt. Das zu transportierende Objekt 6 wird von dieser Bewegung der Welle bzw. der Senke mitgenommen, indem es getrieben durch die Schwerkraft auf der geneigten Fläche der Wellenfront bzw. der geneigten rückwärtigen Fläche der Senke gleitet. Wegen der gleitenden Relativbewegung zwischen dem Objekt 6 und der Membran 2 ist eine geringe Reibung zwischen dem Objekt 6 und der Membran 2 vorteilhaft. Bei dem erfindungsgemäßen Förderer handelt es sich also eigentlich um einen Gleitförderer.

Damit das Objekt 6 mit einer gleich bleibenden Geschwindigkeit bewegt wird, müssen die Reibungskraft F_{R} und die Hangabtriebskraft F_{A} im Gleichgewicht sein, das heißt sie müssen gleich groß und entgegengesetzt gerichtet sein. Die Hangabtriebskraft F_{A} berechnet sich aus der auf das Objekt 6 wirkenden Schwerkraft F_{S} = mg und dem Neigungswinkel α der Membran 2 am Ort des Objektes 6 nach der Gleichung F_{A} = mg sin (α). Das Symbol m kennzeichnet dabei die Masse des Objektes 6 und g die Erdbeschleunigung. Die Reibungskraft ergibt sich aus dem Produkt des Reibbeiwertes µ und der Aufstandskraft. Die Aufstandskraft ist die Komponente der Schwerkraft senkrecht zur Membran 2 am Ort des Objektes 6. Für die Reibungskraft gilt somit F_{R} = µ mg cos(α). Aus der Bedingung, dass beide Kräfte im Gleichgewicht gleich groß sein müssen, folgt für den Neigungswinkel am Ort des Objektes 6: tan(α) = µ. Für eine Beschleunigung des Objektes 6 müsste der Neigungswinkel größer gewählt werden.

Die in den Figuren 1a, 1b und 1c gezeigten Größenverhältnisse sind nicht maßstabsgerecht, sondern dienen lediglich der Veranschaulichung des Prinzips der Fördervorrichtung, das abstrahiert darin besteht, gesteuert eine sich im Raum fortbewegende schiefe Ebene für die Objekte zu schaffen.

In den meisten der nachfolgend beschriebenen Figuren wird die Erfindung nur anhand der Erzeugung von Wellen 4 in der Membran 2 erläutert. Das Beschriebene gilt dabei völlig analog auch für die Erzeugung von Senken 5 oder für das gleichzeitige Erzeugen von Senken 5 und Wellen 4 in der Membran 2.

Die Form und die Bewegung der Oberflächenwelle 4 in der elastischen Membran 2 sind bestimmt durch die Art der Bewegung, die das Objekt 6 ausführen soll. Gesteuert wird die Wellenerzeugung und -bewegung von einer Steuereinrichtung. Für geradlinige Objektbewegungen reichen z.B. gerade Wellenzüge aus, die entlang der gewünschten Bewegungsrichtung über die Oberfläche wandern. Um unerwünschte seitliche Bewegungen des Objektes 6 zu verhindern, kann der Wellenzug 4 jedoch auch schwach gekrümmt sein, wie dies in Fig. 2a angedeutet ist. Soll das Objekt 6 auf einer gekrümmten Bahn in der Förderebene bewegt werden, z.B. um seitlich ausgeschleust zu werden, muss der Wellenzug 4 gleichzeitig mit der Vorwärtsbewegung auch eine Drehung ausführen. Bei engmaschiger Verteilung der Stellelemente 3 können in der elastischen Membran 2 beliebig geformte und bewegte Wellen 4 erzeugt werden. Es können dann Objekte 6 von jedem Ort der Membranfläche zu jedem anderen Ort der Membranfläche bewegt werden. Auf diese Weise lassen sich beliebige Transportwege auf der Fläche realisieren. Das System kann daher flexibel an sich ändernde Transportaufgaben angepasst werden, ohne dass hierzu eine Änderung der Hardware erforderlich ist. Es muss lediglich die die Stellelemente 3 ansprechende Steuereinheit ggf. ergänzt oder verändert werden, z.B. durch eine Anpassung der Steuersoftware, wobei zweckmäßigerweise die Steuersoftware für unterschiedliche Bewegungsmuster unterschiedliche Routinen aufweist. Außerdem kann das System auch zum Sortieren verschiedener Objekte 6 genutzt werden, indem z. B. alle ankommenden Objekte 6 an einem Ausgangsort auf der Membran 2 aufgesetzt werden und anschließend zu den jeweiligen objektspezifischen Zielorten transportiert werden.

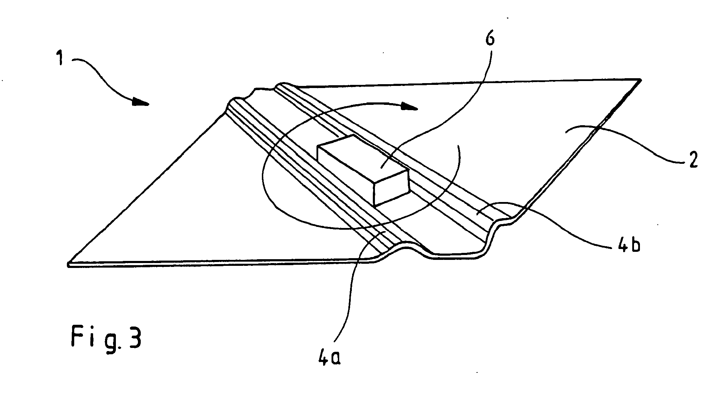

Auch die Handhabung von Objekten 6 ist mit der Vorrichtung 1 möglich, wie in Fig. 3 gezeigt. So kann z.B. die Ausrichtung eines Objektes 6 durch zwei parallele Wellen 4a und 4b verändert werden, die sich gemeinsam synchron um eine zur Membranebene senkrechten Achse drehen. Die Änderung der Ausrichtung eines Objektes 6 bedarf für den Fall, daß in der Membran 2 eine Senke 5 ausgebildet wird, nicht der Erzeugung einer zweiten Senke.

Da in der elastischen Membran 2 durch die Stellelemente 3 gleichzeitig mehrere Wellen 4 erzeugt werden können, ist es auch möglich, mehrere Objekte 6 gleichzeitig zu transportieren, zu sortieren oder zu handhaben.

Mit diesen anhand der Figuren 1 bis 3 geschilderten grundlegenden Funktionen der Vorrichtung 1 lassen sich auch komplexere Materialflussoperationen wie die Ladungsbildung und das Kommissionieren realisieren. Bei der Ladungsbildung werden z.B. mehrere Objekte 6 an verschiedenen Positionen der Vorrichtung 1 aufgegeben (z.B. durch ein Förderband 7) und zu einem Sammelpunkt gefördert. Dort werden Sie durch die Förderwelle 4 z.B. gegen eine bereits bestehende Welle transportiert. Die stehende Welle dient dabei als Stoppwelle zum Zusammenschieben der Objekte 6. Nach dem Zusammenfassen aller Objekte 6 kann die Gruppe der Objekte 6 dann zum nachfolgenden logistischen System, z.B. durch Schrägstellen des Systems und eine Förderwelle, weitergegeben werden. Beim Kommissionieren werden z.B. mehrere sortenreine Gruppen unterschiedlicher Objekte 6 auf die Vorrichtung 1 aufgegeben. Die Objekte 6 der Gruppen werden anschließend auf der elastischen Membran 2 durch Wellen 4 (oder Senken 5) vereinzelt, zu unterschiedlichen Zielorten transportiert und dort, analog zu der Ladungsbildung, als auftragsspezifische Ladeeinheiten für die nachfolgenden logistischen Funktionen bereitgestellt. Alle diese Aktionen erfordern lediglich, daß die die Stellelemente 3 steuernde Steuereinheit z.B. softwareseitig in die Lage versetzt ist, diese komplexen Vorgänge durch zeitlich und örtlich koordinierte Ansteuerung der Stellelemente 3 umzusetzen.

Die Vorrichtung 1 kann Schnittstellen zur Umgebung haben, so dass es möglich ist, mehrere Systeme miteinander zu verbinden, sie also z.B. hintereinander oder nebeneinander anzuordnen. Neben der Übergabe der Objekte 6 von System zu System sollte die elektronische Steuereinheit die Weitergabe aller Informationen zum nachgeordneten System ermöglichen. So können einen Vielzahl von kompakten Systemen miteinander kombiniert werden, um logistische Funktionen flexibel miteinander zu verknüpfen und größere innerbetriebliche Entfernungen zu überwinden.

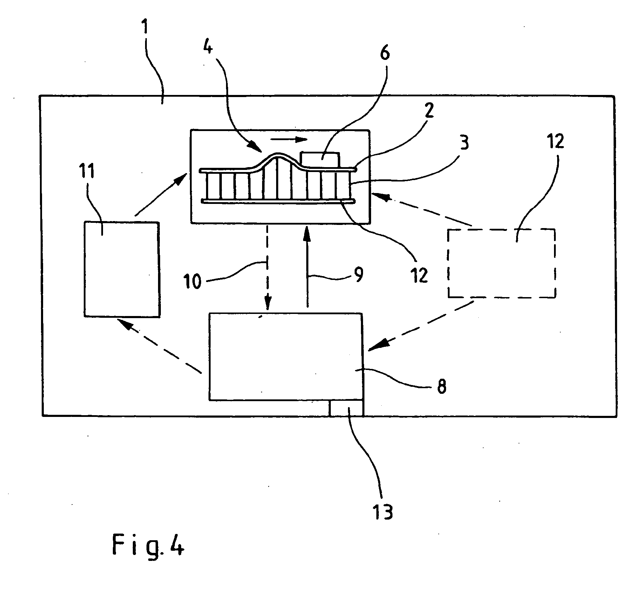

Fig. 4 zeigt den funktionellen Aufbau einer Fördervorrichtung 1. Die Vorrichtung besteht zum einen aus einer Steuereinrichtung 8, die eine Schnittstelle 13 zur Verbindung mit anderen Vorrichtungen aufweist, und zum anderen aus denjenigen Komponenten, die von der Steuereinrichtung zur Erzeugung einer Förderwelle 4 (oder einer Fördersenke 5) angesteuert werden. Diese die Welle 4 erzeugenden Komponenten bestehen aus einer elastischen Membran 2, einer Vielzahl gleicher Aktoren 3, die von der elektronischen Steuereinheit 8 über eine Steuerleitung 9 angesteuert werden. Optional können die Aktoren z.B. zustandsindikative Signale über eine Signalleitung 10 zurückgeben, z.B. Signale bezüglich des Auslenkungsstatus oder zu einer Störung. Weiterhin besteht die Vorrichtung 1 aus einer Leistungsversorgungseinheit 11 und einem Gestell 12. Die Aktoren 3 sind zwischen dem Gestell 12 und der elastischen Membran 2 angeordnet. Um weitgehend beliebige Wellenformen und Wellenbewegungen in der elastischen Membran 4 erzeugen zu können, wird eine Vielzahl gleicher Aktoren 3 gleichmäßig verteilt unterhalb der Membran 2 z.B. auf einer Grundplatte des Gestells 12 angeordnet. Als Aktoren 3 können hierbei alle technischen Elemente wie elektromagnetische, piezoelektrische, pneumatische oder hydraulische Linearaktoren verwendet werden, deren Länge sich in Abhängigkeit von einem Steuersignal verändert, bzw. deren Bewegung zu einer Auslenkung der elastischen Membran führt. Wegen der bevorzugt großen Anzahl der benötigten Aktoren 3 ist es vorteilhaft, möglichst einfach aufgebaute und somit kostengünstige Aktoren 3 einzusetzen. Geeignete Aktoren 3 sind deshalb insbesondere einseitig wirkende Aktoren, die nur aktiv ausfahren (ihre Länge vergrößern), aber nicht wieder aktiv zusammenfahren (ihre Länge verringern) sondern durch Rückstellkräfte zusammengedrückt werden müssen. Zur Erzeugung der erforderlichen Rückstellkräfte werden z.B. zwischen den Aktoren 3 elastische Elemente angeordnet, deren untere Enden mit dem Gestell 12 und deren obere Enden mit der Membran 2 beziehungsweise dem beweglichen Teil der Aktoren 3 verbunden sind. Als elastische Elemente können metallische Federn, Elastomerfedern, E-lastomerschäume oder ähnliche Bauelemente verwendet werden. Für Fördersenken ist das Vorstehende sinngemäß umzudrehen.

Die elastische Membran 2 kann angepasst an die jeweiligen Bedürfnisse der zu erfüllenden logistischen Funktionen frei gestaltet werden. Beispielsweise kann sie eine rechteckige, kreisförmige, ovale oder sternförmige Gestalt besitzen sowie als gerader oder gekrümmter schmaler Streifen ausgeführt sein. Die Membran 2 selbst sollte mit Vorteil die Höhenunterschiede der an einzelnen Punkten angreifenden Aktoren 3 vergleichmäßigen, so dass die Oberseite der Membran 2 eine möglichst stetige Fläche ohne Stufen und Kanten bildet. Hierzu kann es vorteilhaft sein, wenn die Membran 2 nicht überall gleich dick ist, sondern in den Bereichen, wo die Aktorkräfte eingeleitet werden, dicker als in übrigen Bereichen ist. Die Oberseite der Membran 2 ist bevorzugt so auszuführen, dass die Reibung der Objekte 6 auf der Membran 2 möglichst gering ist. Dieses kann durch die Wahl eines reibungsarmen Materials für die Membran 2 selbst oder durch eine Beschichtung der Membranoberseite mit einem reibungsarmen Material erreicht werden. Weiterhin kann die Reibung zwischen den Objekten 6 und der Membran 2 durch die Anbringung von feinen Borsten oder Haaren auf der Oberseite, durch das Ausblasen von Pressluft durch viele kleine Düsenöffnungen in der Membran 2 oder durch die Erzeugung kleiner Schwingungen (Vibrationen) mithilfe der ohnehin vorhandenen Aktoren 3 verringert werden. Die Oberseite der Membran 2 sollte außerdem ausreichend verschleißfest sein, um den Abrieb durch die Gleitbewegung der Objekte 6 gering zu halten. Hierdurch werden Verschmutzungen vermieden und die Lebensdauer der Membran 2 erhöht.

Um die vielfältigen und zum Teil widersprüchlichen Anforderungen an die Membran 2 zu erfüllen, ist es vorteilhaft diese mehrschichtig aufzubauen. Die untere Schicht kann dabei z.B. gute elastische Eigenschaften besitzen und die obere Schicht aus einem reibungsarmen, verschleißfesten Material bestehen. Die Verbindung der beiden Schichten sollte bevorzugt so ausgeführt werden, dass ein Austausch der oberen Schicht, wenn diese zu stark verschlissen ist, mit geringem Aufwand möglich ist.

In einer Steuereinheit 8 werden die jeweiligen Längen der einzelnen Aktoren 3 sowie die zugehörigen Steuersignale berechnet, die zur Erzeugung der momentanen Wellenform (oder Senkenform) in der elastischen Membran 2 notwendig sind. Die Steuereinheit 8 ist durch Signalleitung 9 mit den einzelnen Aktoren 3 verbunden, über die die berechneten Steuersignale übermittelt werden. In der Steuereinheit 8 sind in einer bevorzugten Ausführungsform die Wellenformen und Wellenbewegungen für die verschiedenen vorgesehenen Transport-, Sortier- und Handhabungsfunktionen in einer Datenbank hinterlegt. Dabei können die Wellenformen und Bewegungen auch noch von den Eigenschaften der jeweiligen Objekte 6 abhängig sein. Denn ein kugelförmiges Objekt benötigt zum Beispiel eine andere Wellen- bzw. Senkenform als eine flache Platte.

Zur gezeigten Fördervorrichtung gehört außerdem eine Leistungsversorgungseinheit 11, die die Aktoren 3 mit der jeweils erforderlichen elektrischen, pneumatischen oder hydraulischen Leistung versorgt. Die Steuerung der Aktoren 3 könnte z.B. auch über die Steuerung der Leistungsversorgungseinheit 11 erfolgen, wenn eine steuerbare und individuelle Verbindung zwischen Versorgungseinheit 11 und jedem Aktor 3 besteht.

Optional kann die Fördervorrichtung 1 auch über Mittel 12 verfügen, die die zu fördernden Objekte 6 erkennt, und z.B. Informationen bezüglich Art, Lage, Größe, Gewicht an die Steuereinrichtung 8 liefert. Wenn die Objekte 6 z.B. mit Informationsträgern wie Strichcodes oder Tags ausgestattet sind, dann können geeignete Lesegeräte als Erkennungsmittel 12 verwendet werden.

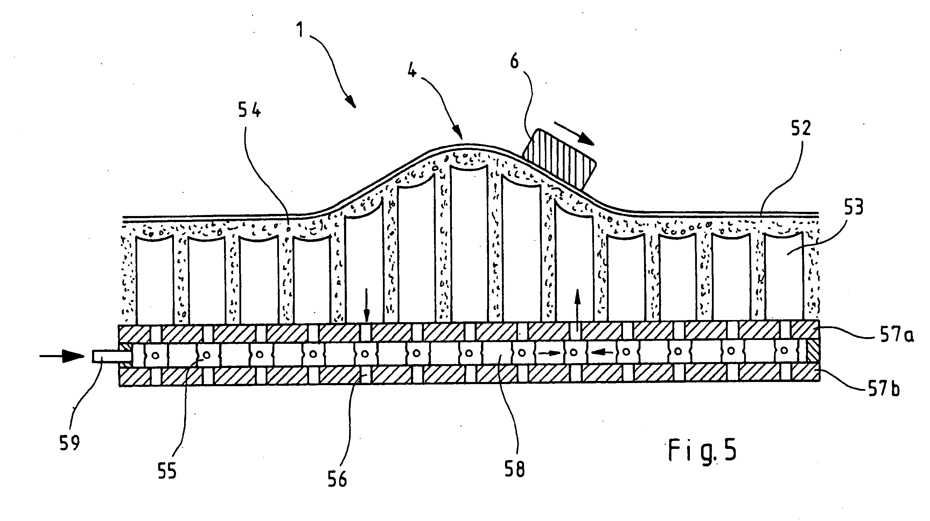

Ein erstes Ausführungsbeispiel der Fördervorrichtung 1 ist in Fig. 5 schematisch dargestellt. Hierbei werden die Aktoren durch Hohlräume 53 gebildet, die in einer Schicht 54 aus einem hochelastischen Material (z. B. Elastomerschaum) eingebettet sind, und die über darunter befindliche Steuerventile 55 mit Druckluft beaufschlagbar sind. Auf der Elastomerschicht 54 ist die dünne Membran 52 aus einem reibungsarmen und verschleißfesten Material aufgeklebt. Zur Betätigung der Aktoren 53, 54 wird durch die Steuerventile 55 Druckluft den Hohlräumen 53 zugeführt bzw. aus den Hohlräumen 53 durch Auslassöffnungen 56 in die Umgebung abgelassen. Um eine aufwendige Zufuhr der Druckluft über Rohre oder Schläuche zu den einzelnen Aktoren 53, 54 zu vermeiden, besteht das die Vorrichtung tragende Gestell aus einer Grundplatte aus zwei einzelnen Platten 57a und 57b, die zueinander in einem gewissen Abstand angeordnet sind. Der dadurch gebildete Druckluftraum 58 ist an den Rändern abgedichtet und wird mit Hilfe eines nicht dargestellten Kompressors über die Zuleitung 59 mit Druckluft versorgt. Zwischen den beiden Platten 57a, 57b sind auch jeweils den Hohlräumen 53 zugeordnete Steuerventile 55 angeordnet. Sie weisen sowohl gesteuert freigebbare Öffnungen zu dem mit Druckluft gefüllten Druckluftraum 58 und zu dem Hohlraum 53 als auch eine gesteuerte Öffnung 56 in der unteren Platte 57b zur Umgebung auf. Zum Ausfahren eines Aktors 53, 54 öffnet das zugeordnete Steuerventil 55 die Verbindung zwischen dem Druckluftraum 58 und dem Hohlraum 53 in der Elastomerschicht 54. Die Menge der einströmenden Druckluft kann z.B. gesteuert werden je nach gewünschter Wellenamplitude oder Wellenform. Bei Erreichen des Sollzustandes des Aktors 53, 54 kann die Druckluftzufuhr vom Steuerventil 55 unterbrochen werden. Zum Einfahren des Aktors 53, 54 schließt das Steuerventil 55 die Druckluftverbindung zum Hohlraum 53 (wenn noch nicht geschehen) und öffnet die Verbindung zwischen dem Hohlraum 53 und den Auslassöffnungen 56 in der unteren Platte 57b, so dass die Druckluft in die Umgebung entweichen kann.

Die Betätigung der Ventile 55 erfolgt elektromagnetisch. Hierzu sind die Ventile 55 über nicht dargestellte elektrische Signalleitungen mit der ebenfalls nicht gezeigten Steuereinheit 8 verbunden. Die Befüllung und Entleerung der Aktoren 53, 54 mit bzw. von Druckluft kann gesteuert oder geregelt erfolgen. Bei der Steuerung wird das Ventil 55 z.B. nach einem vorab bestimmten Zeitgesetz geöffnet und geschlossen. Für einen geregelten Betrieb kann dagegen die Länge des jeweiligen Aktors 53, 54 erfasst und mit einem in der Steuereinheit 8 vorgegebenen, z.B. errechneten, Sollwert verglichen werden. Bei einer Regelabweichung ist dann die Öffnung des den Aktor 53, 54 beherrschenden Ventils 55 zu ändern oder aufrechtzuerhalten, bis die Länge des Aktors 53, 54 mit dem Sollwert hinreichend genau übereinstimmt. Zur Messung der Aktorlänge 53, 54 kann ein zusätzlicher Sensor vorgesehen werden.

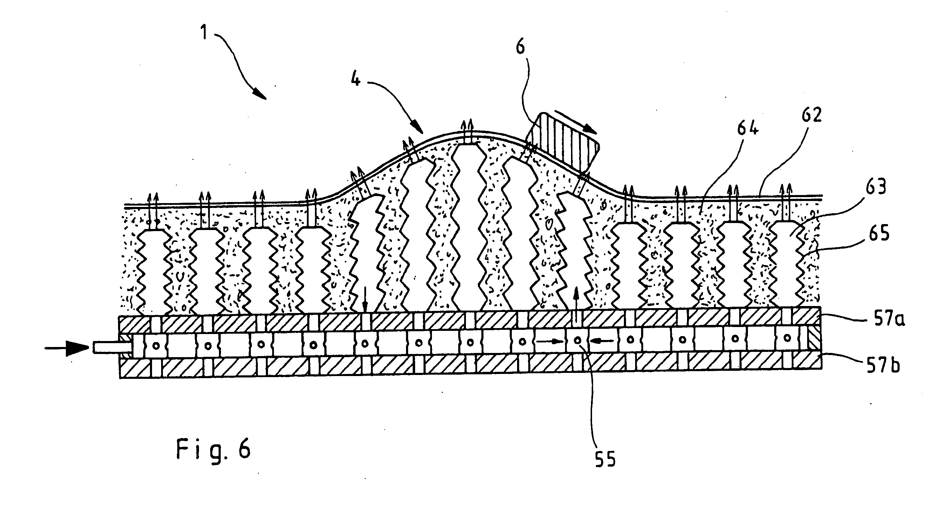

Eine Variante des ersten Ausführungsbeispieles ist in Fig. 6 dargestellt. Bei diesem zweiten Ausführungsbeispiel werden in den Hohlräumen 63 des hochelastischen Materials 64 Faltenbälge 65 als Aktoren genutzt. Bei der Beaufschlagung mit Druckluft verhindern die Faltenbälge 65 eine radiale Ausdehnung des Hohlraums 63. Sie dehnen sich bei Druckbeaufschlagung im wesentlichen nur in Längsrichtung aus. Dabei richten sich die als biegeweichen Elemente ausgebildeten Faltenbälge 65 nach der Neigung der Membran 62 aus und unterstützen deren gerade eingenommene Geometrie. Die Biegung der Faltenbälge 65 wird durch das umgebende hochelastische Material 64 begrenzt und damit ein Knicken vermieden. Die Betätigung der Aktoren 63, 64, 65 erfolgt wie zu dem ersten Ausführungsbeispiel der Fig. 5 erläutert über Steuerventile 55 zwischen den Grundplatten 57a, 57b.

Als zusätzliche Unterstützung des Gleitens der Objekte 6 auf der Membran 62 ist das obere Ende der Faltenbälge 65 mit vielen kleinen Düsenöffnungen versehen, die sich entweder durch das elastische Material 64 hindurch bis zur Oberseite der Membran 62 fortsetzen, oder das elastische Material 64 und die Membran 62 sind luftdurchlässig ausgebildet. Ein kontrolliertes Austreten von Druckluft aus der Membran 62 soll ermöglicht sein, ohne den Überdruck im Druckluftraum 58 und im Hohlraum 63 zu stark abfallen zu lassen. Auf diese Weise werden die zu transportierenden Objekte 6 von der Membran 62 aus mit Druckluft beaufschlagt. Dies führt zu einem Luftpolster unter den Objekten 6 und einem Sinken der Aufstandskraft bzw. einem Sinken der damit verbundenen Reibung zwischen Objekt 6 und Membran 62.

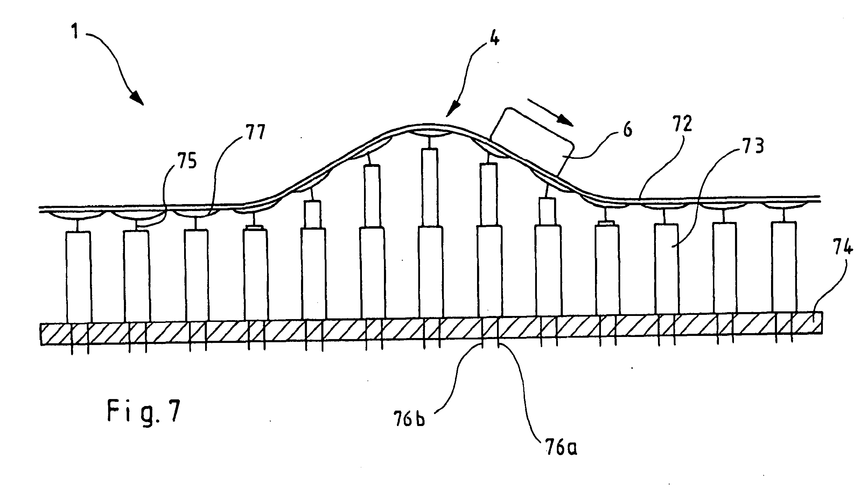

Ein drittes Ausführungsbeispiel ist in Fig. 7 schematisch dargestellt. In dieser alternativen Ausführungsform einer Fördervorrichtung 1 werden beidseitig wirkende elektromagnetische Linearaktoren 73 verwendet, deren untere Enden fest mit einer Grundplatte 74 verbunden sind. Die oberen Enden der Aktoren 73 sind derart an der Membran 72 befestigt, dass sowohl Zug- als auch Druckkräfte über eine größere Fläche übertragen werden. Die oberen Enden der Aktoren 73 sind dabei so ausgestaltet, dass sie sich an die örtliche Neigung der Membran 72 anpassen können. Hierzu sind die Verbindungen zwischen den Aktoren 73 und der Membran 72 als dünne elastische Schäfte 75 ausgeführt, die sich leicht biegen lassen. Die Leistungsversorgung und Ansteuerung der Aktoren erfolgt über elektrische Leitungen, die mit den Anschlüssen 76a und 76b der Aktoren 73 verbunden werden. Um eine Vielzahl einzelner elektrischer Leitungen zu vermeiden, kann hierfür auch eine Leiterbahnenplatte verwendet werden. Die Membran 72 ist in den Bereichen, in denen die Aktoren 73 mit ihren elastischen Schäften 75 angreifen, mit Verdickungen 77 ausgebildet.

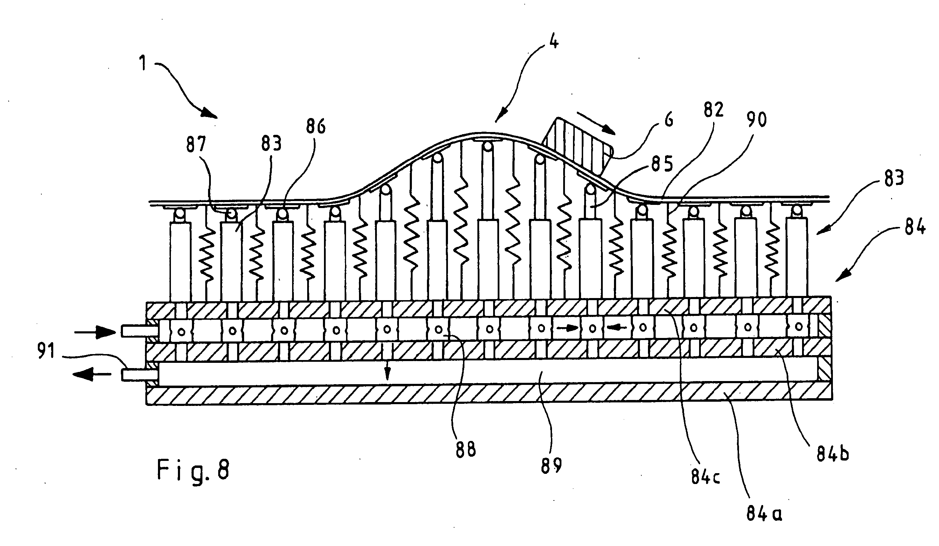

In einem vierten, in Fig. 8 dargestellten Ausführungsbeispiel werden als Aktoren einfach aufgebaute und kostengünstig herstellbare, einseitig wirkende hydraulische Plungerzylinder 83 verwendet, deren Zylinderrohre an den unteren Enden fest mit einer Grundplatte 84 verbunden sind. An den oberen Enden der Kolbenstangen 85 sind kugelförmigen Mulden vorgesehen, in denen sich die Druckplatten 86 über kugelförmigen Flächen abstützen. Diese Anordnung bildet ein einfaches Kugelgelenk 87, das es den Druckplatten 86 ermöglicht, sich optimal an die örtliche Neigung der Membran 82 anzupassen. Die Zufuhr von Drucköl und die Anbringung der die Plungerzylinder beherrschenden Steuerventile 88 unterhalb der Hydraulikzylinder 83 ist analog zur Zufuhr der Druckluft im ersten und zweiten Ausführungsbeispiel ausgeführt, um eine Vielzahl einzelner jeweils von Steuerventilen beherrschten Rohrleitungen oder Schläuche zwischen einer nicht gezeigten Versorgungseinheit, die z.B. eine hydraulische Pumpe oder ein Drucköltank sein kann, zu und von den Aktoren 83 zu vermeiden. Zusätzlich muss bei dieser Ausführung jedoch das aus den Zylindern 83 zurück strömende Öl zurückgeleitet werden, da es anders als Druckluft nicht einfach an die Umgebung abgegeben werden kann. Für die Ausbildung eines geschlossenen Ölkreislaufes ist die Grundplatte 84 deshalb aus drei einzelnen Platten 84a, 84b und 84c aufgebaut. Hierdurch entsteht ein zusätzlicher Hohlraum 89 zwischen der mittleren Platte 84b und der unteren Platte 84a, durch den das Hydrauliköl aus den Zylindern 83 zu einem Abflussstutzen 91 und von dort zurück zu einem nicht gezeigten Öltank geleitet wird. Da die Hydraulikzylinder 83 nur einseitig wirken, sind zusätzliche elastische Elemente (Federn) 90 vorgesehen, die die Kolbenstangen 85 wieder in die Zylinder 83 zurück drücken, um die Auslenkung der Membran 82 auf der Rückseite der Welle 4 wieder zu verringern.

In den Figuren 5 bis 8 sind aufgrund der gewählten Seitenansicht nur die in einer Richtung hintereinander liegenden Stellelemente erkennbar. Bei allen Ausführungsbeispielen sind allerdings die Stellelemente verteilt auf Gitterpunkten eines gleichmäßigen Gitters angeordnet. Die Stellelemente können dabei streng in Spalten und Reihen angeordnet sein, sie können aber auch versetzt auf Lücke angeordnet sein, um eine noch dichtere Anordnung zu erreichen.

Die beschriebene Fördervorrichtung dient nicht nur dem Fördern von Objekten, also dem Bewegen eines Objektes von einem Punkt A zu einem Punkt B, sondern es sind weitere logistische Funktionen realisierbar: Puffern, d.h. Verlangsamen bzw. Stillstand eines Objektes; Vereinzeln, d.h. Erzeugen eines Abstandes zwischen Objekten; Verteilen, das heißt Fördern vereinzelter Objekte auf unterschiedlichen Förderbahnen; Zusammenführen, das heißt Fördern von an unterschiedlichen Stellen aufgegebenen Objekten zu einem gemeinsamen Ort; Sortieren, das heißt Aufgabe beliebiger Objekte an beliebigen Stellen und Verteilen der Objekte, ggf. unter Vereinzelung, auf gewünschte Abgabestellen; Reihenfolge ändern, das heißt Ausscheren eines Objektes aus einer Reihe von Objekten und einscheren des Objektes an eine andere Position der Objektreihe, Kommissionieren, das heißt auftragsspezifisches Zusammenstellen von verschiedenen Objekten, die an unterschiedlichen Stellen aufgegeben werden.

Es sind mit der vorliegenden Erfindung bisher im Stand der Technik nicht mögliche Förderverfahren ausführbar.

Ein solches Verfahren zum Transportieren, Sortieren und/oder Handhaben von Objekten (6), besteht z.B. aus den folgenden Schritten: Bereitstellen einer flächigen, eine Förderebene bildenden Fördermembran (2, 52, 62, 72, 82), Anordnen von mehreren Stellelementen (3, 53, 54, 63, 64, 65, 73, 83) auf Gitterpunkten eines Gitters unterhalb der Fördermembran (2, 52, 62, 72, 82) und gleichmäßig über dessen Fläche verteilt, Erzeugung einer Welle (4) oder einer Senke (5) in der Fördermembran (2, 52, 62, 72, 82) durch koordiniertes Ansteuern mehrerer Stellelemente (3, 53, 54, 63, 64, 65, 73, 83) zur gezielten Auslenkung der Fördermembran (2, 52, 62, 72, 82) im wesentlichen senkrecht zur Förderebene zur Bewegung eines zu fördernden Objektes (6) in der Förderebene.

Es wird zur Ausführung des vorstehenden Verfahrens bevorzugt eine Vorrichtung (1) nach einem der Ansprüche 1 bis 18 verwendet.

Weiterhin ist ein Förderverfahren für die Förderung eines Objektes (6) bevorzugt möglich durch Ansteuern geeigneter Stellelemente (3, 53, 54, 63, 64, 65, 73, 83), damit eine Welle (4) oder Senke (5) in der Fördermembran (2, 52, 62, 72, 82) quer zur Förderrichtung erzeugt wird, und diese Welle (4) oder Senke (5) durch geeignete zeitliche Ansteuerung in Förderrichtung hintereinander und/oder nebeneinander liegender Stellelemente (3, 53, 54, 63, 64, 65, 73, 83) in Förderrichtung wandert.

Es ist bevorzugt, dass die Ansteuerung der Stellelemente (3, 53, 54, 63, 64, 65, 73, 83) so erfolgt, daß die Welle (4) oder Senke (5) in der Fördermembran (2, 52, 62, 72, 82) eine in Förderrichtung konvexe Krümmung aufweist.

Es ist weiterhin bevorzugt, dass für die Sortierung eines Objektes (6) die Ansteuerung der Stellelemente (3, 53, 54, 63, 64, 65, 73, 83) so erfolgt, daß die Welle (4) oder Senke (5) in der Fördermembran (2, 52, 62, 72, 82) in Förderrichtung wandert und eine Drehung in der Förderebene ausführt.

Es ist weiterhin bevorzugt, dass für die Handhabung eines Objektes (6) die Ansteuerung der Stellelemente (3, 53, 54, 63, 64, 65, 73, 83) so erfolgt, daß die Senke (5) in der Fördermembran (2, 52, 62, 72, 82) oder zwei das handzuhabende Objekt (6) einschließende Wellen (4a, 4b) in der Fördermembran (2, 52, 62, 72, 82) eine Drehung in der Förderebene ausführt bzw. parallel zueinander ausführen.

Es ist weiterhin bevorzugt, dass zur gleichzeitigen Förderung mehrere Objekte (6) die Stellelemente (3, 53, 54, 63, 64, 65, 73, 83) zur gleichzeitigen Ausbildung mehrerer Wellen (4) oder Senken (5) in der Fördermembran (2, 52, 62, 72, 82) angesteuert werden.

Es ist weiterhin bevorzugt, dass für das Anhalten eines Objekte (6) die Stellelemente (3, 53, 54, 63, 64, 65, 73, 83) zur Erzeugung einer stehenden Welle oder Senke angesteuert werden.

Es ist weiterhin bevorzugt, dass eine Objekterfassungseinrichtung (12) zu fördernde Objekte (6) erfaßt und die Ansteuerung der Stellelemente (3, 53, 54, 63, 64, 65, 73, 83) in Abhängigkeit von Informationen der Objekterfassungseinrichtung (12) erfolgt.

Schließlich ist eine Fördervorrichtung (1) bevorzugt, bei der die Steuereinrichtung (8) zur Durchführung eines oder einer beliebigen Zahl der oben geschilderten Förderverfahren ausgebildet ist.

## Patentansprüche

1. Fördervorrichtung (1) zum Transportieren, Sortieren und/oder Handhaben von Objekten (6), mit einer eine Förderebene definierenden flächigen Fördermembran (2, 52, 62, 72, 82), die elastisch verformbar ausgebildet ist, mit mehreren von einer Steuereinrichtung (8) gesteuerten Stellelementen (3, 53, 54, 63, 64, 65, 73, 83), die unterhalb der Förderebene unter der Fördermembran (2, 52, 62, 72, 82) derart angeordnet sind, daß Betätigung der Stellelemente (3, 53, 54, 63, 64, 65, 73, 83) zu einer Auslenkung der Fördermembran (2, 52, 62, 72, 82) durch das betätigte Stellelement (3, 53, 54, 63, 64, 65, 73, 83) im wesentlichen senkrecht zur Förderebene führt, **dadurch gekennzeichnet, daß** die Stellelemente (3, 53, 54, 63, 64, 65, 73, 83) auf Gitterpunkten eines Gitters im wesentlichen gleichmäßig über die Fläche der Membran (2, 52, 62, 72, 82) verteilt angeordnet sind und in einer in der Förderebene liegenden Förderrichtung mehrere Stellelemente (3, 53, 54, 63, 64, 65, 73, 83) hintereinander liegen, und daβ die Steuereinrichtung (8) ausgebildet ist, Gruppen von Stellelementen (3, 53, 54, 63, 64, 65, 73, 83) zur Bewegung eines Objektes (6) koordiniert zu betätigen, wobei Vibrationsmittel (3, 53, 54, 63, 64, 65, 73, 83) vorgesehen sind zur Erzeugung einer zumindest bereichsweisen Vibration der Membran (2, 52, 62, 72, 82) und/oder wobei die Stellelemente (53, 54, 63, 64, 65) mittels Druckluft arbeiten, und eine Druckluftversorgungseinrichtung (11) mit den Stellelementen (53, 54, 63, 64, 65) verbunden ist und die Fördermembran (62) Ausblasdüsen aufweist, die von der Druckluftversorgungseinrichtung (11) mit Druckluft versorgt sind.

2. Fördervorrichtung (1) nach Anspruch 1, **dadurch gekennzeichnet, daß** sich die Förderebene der Fördermembran (2, 52, 62, 72, 82) im wesentlichen horizontal erstreckt.

3. Fördervorrichtung nach Anspruch 1 oder 2, **dadurch gekennzeichnet, dass** die Steuereinrichtung (8) ausgebildet ist, in einem Hebe-/Senkungsmodus wenigstens die in einem Randbereich der Fördermembran (2, 52, 62, 72, 82) angeordneten Stellelemente (3, 53, 54, 63, 64, 65, 73, 83) sich synchron bewegend und dadurch zumindest diesen Randbereich der Membran (2, 52, 62, 72, 82) vertikal anhebend oder absenkend anzusteuern, insbesondere alle Stellelemente (3, 53, 54, 63, 64, 65, 73, 83) sich synchron bewegend und dadurch die Membran (2, 52, 62, 72, 82) insgesamt vertikal anhebend oder absenkend anzusteuern.

4. Fördervorrichtung (1) nach einem der vorhergehenden Ansprüche, **dadurch gekennzeichnet, dass** alle Stellelemente (3, 53, 54, 63, 64, 65, 73, 83) baugleich sind.

5. Fördervorrichtung (1) nach einem der vorhergehenden Ansprüche, **dadurch gekennzeichnet, daß** die Stellelemente als einseitig wirkende Aktoren (53, 54, 63, 64, 65, 83) ausgestaltet sind.

6. Fördervorrichtung (1) nach einem der vorhergehenden Ansprüche, **dadurch gekennzeichnet, daß** elastische Elemente (90) an der Fördermembran (82) angreifen, die bei einer Auslenkung der Fördermembran (82) eine rückstellende Kraft erzeugen.

7. Fördervorrichtung (1) nach einem der vorhergehenden Ansprüche, **dadurch gekennzeichnet, daß** die Membran (2, 52, 62, 72, 82) in Ruhestellung auf den Stellelementen (3, 53, 54, 63, 64, 65, 73, 83) aufliegt.

8. Fördervorrichtung (1) nach einem der vorhergehenden Ansprüche, **dadurch gekennzeichnet, daß** die Fördermembran (72) im Kontaktbereich mit den Stellelementen (73) dicker ausgebildet ist als in den dazwischen liegenden Bereichen.

9. Fördervorrichtung (1) nach einem der vorhergehenden Ansprüche, **dadurch gekennzeichnet, daß** die Oberfläche der Fördermembran (2, 52, 62, 72, 82) reibungsarm und verschleißfest ausgeführt ist.

10. Fördervorrichtung (1) nach einem der vorhergehenden Ansprüche, **dadurch gekennzeichnet, daß** die Fördermembran (2, 52, 62, 72, 82) mehrschichtig aufgebaut ist und wenigstens aus einer verschleißfesten und reibungsarmen Oberschicht und einer elastischen Trägerschicht besteht.

11. Fördervorrichtung (1) nach Anspruch 10, **dadurch gekennzeichnet, daß** die Schichten der Fördermembran (2, 52, 62, 72, 82) lösbar miteinander verbunden und einzeln austauschbar ausgeführt sind.

12. Fördervorrichtung (1) nach einem der vorhergehenden Ansprüche, **dadurch gekennzeichnet, daß** die Stellelemente (53, 54, 63, 64, 65) mittels Druckluft arbeiten und als Hohlräume (53, 63) in einem elastischen Material (54, 64) ausgeführt sind, in die über von der Steuereinrichtung (8) beherrschte Steuerventile (55) Druckluft einleitbar ist.

13. Fördervorrichtung (1) nach einAnspruch 12, **dadurch gekennzeichnet, daß** die Hohlräume (63) als Faltenbälge (65) ausgebildet sind.

14. Fördervorrichtung (1) nach einem der vorhergehenden Ansprüche, **dadurch gekennzeichnet, daß** die Stellelemente (63, 64, 65, 73, 83) zumindest in ihrem an die Fördermembran (62, 72, 82) angreifenden Bereich einer Neigungsbewegung der Membran (62, 72, 82) folgend ausgeführt sind.

15. Fördervorrichtung (1) nach einem der vorhergehenden Ansprüche, **dadurch gekennzeichnet, daß** die Stellelemente (3, 53, 54, 63, 64, 65, 73, 83) die Vibrationsmittel bilden.

16. Fördervorrichtung (1) nach einem der vorhergehenden Ansprüche, **dadurch gekennzeichnet, daß** die Stellelemente (53, 54, 63, 64, 65, 73, 83) in der Amplitude ihrer Auslenkung steuerbar ausgebildet sind.

17. Fördervorrichtung (1) nach einem der vorhergehenden Ansprüche, **dadurch gekennzeichnet, daß** Objekterfassungsmittel (12) zur Erfassung insbesondere von Art, Größe und/oder Lage zu fördernder Objekte (6) vorgesehen sind, die kommunizierend mit der Steuereinrichtung (8) verbunden sind.

18. Fördervorrichtung (1) nach einem der vorhergehenden Ansprüche, **dadurch gekennzeichnet, daß** die Steuereinrichtung (8) eine Schnittstelle (13) aufweist, über die die Fördervorrichtung (1) mit anderen Fördervorrichtungen (1) nach den vorhergehenden Ansprüchen oder beliebigen anderen Fördermitteln verbindbar ist.

## Claims

1. A conveying device (1) for transporting, sorting and/or handling objects (6), comprising a two-dimensional conveying membrane (2, 52, 62, 72, 82) defining a conveying plane and being formed such that it can be elastically deformed, comprising a plurality of positioning elements (3, 53, 54, 63, 64, 65, 73, 83) controlled by a controlling device (8) and being arranged below the conveying plane underneath the conveying membrane (2, 52, 62, 72, 82) such that an actuation of the positioning elements (3, 53, 54, 63, 64, 65, 73, 83) results in a deflection of the conveying membrane (2, 52, 62, 72, 82) caused by the actuated positioning element (3, 53, 54, 63, 64, 65, 73, 83), said deflection in essence extending perpendicular to the conveying plane,
**characterized in that**
- the positioning elements (3, 53, 54, 63, 64, 65, 73, 83) are arranged on grid points of a grid such that they are distributed over the area of the membrane (2, 52, 62, 72, 82) in an essentially uniform manner and that a plurality of positioning elements (3, 53, 54, 63, 64, 65, 73, 83) are positioned one behind the other in a conveying direction extending in the conveying plane, and that the controlling device (8) is formed to actuate groups of positioning elements (3, 53, 54, 63, 64, 65, 73, 83) in a coordinated manner for the movement of an object (6), wherein vibration means (3, 53, 54, 63, 64, 65, 73, 83) are provided for generating a vibration of the membrane (2, 52, 62, 72, 82) at least in certain areas and/or wherein the positioning elements (53, 54, 63, 64, 65) are operated by means of compressed air and a compressed air supply device (11) is connected to the positioning elements (53, 54, 63, 64, 65) and the conveying membrane (62) includes blow-out nozzles which are supplied with compressed air from the compressed air supply device (11).

2. The conveying device (1) according to Claim 1, **characterized in that** the conveying plane of the conveying membrane (2, 52, 62, 72, 82) extends in an essentially horizontal direction.

3. The conveying device according to Claim 1 or 2, **characterized in that**, in a raising/lowering mode, the controlling device (8) is formed to activate at least the positioning elements (3, 53, 54, 63, 64, 65, 73, 83) arranged in an edge region of the conveying membrane (2, 52, 62, 72, 82) such that they are moving synchronously and, therefore, vertically raise or lower at least this edge region of the membrane (2, 52, 62, 72, 82), more particularly to activate all positioning elements (3, 53, 54, 63, 64, 65, 73, 83) such that they are moving synchronously and, therefore, vertically raise or lower the membrane (2, 52, 62, 72, 82) as a whole.

4. The conveying device (1) according to any one of the preceding claims, **characterized in that** all positioning elements (3, 53, 54, 63, 64, 65, 73, 83) are identical in construction.

5. The conveying device (1) according to any one of the preceding claims, **characterized in that** the positioning elements are configured as actuators (53, 54, 63, 64, 65, 83) acting on one side.

6. The conveying device (1) according to any one of the preceding claims, **characterized in that** elastic elements (90) engage the conveying membrane (82), said elastic elements (90) generating a restoring force when the conveying membrane (82) is deflected.

7. The conveying device (1) according to any one of the preceding claims, **characterized in that** the membrane (2, 52, 62, 72, 82) rests on the positioning elements (3, 53, 54, 63, 64, 65, 73, 83) while it is in its rest position.

8. The conveying device (1) according to any one of the preceding claims, **characterized in that** the conveying membrane (72) is formed thicker in the region of contact with the positioning elements (73) than in the regions disposed therebetween.

9. The conveying device (1) according to any one of the preceding claims, **characterized in that** the surface of the conveying membrane (2, 52, 62, 72, 82) is designed such that its friction is low and that it is wear-resistant.

10. The conveying device (1) according to any one of the preceding claims, **characterized in that** the conveying membrane (2, 52, 62, 72, 82) has a multi-layer structure and consists of at least one wear-resistant and low-friction top layer and an elastic base layer.

11. The conveying device (1) according to Claim 10, **characterized in that** the layers of the conveying membrane (2, 52, 62, 72, 82) are connected to each other in a detachable manner and are designed such that they can be exchanged individually.

12. The conveying device (1) according to any one of the preceding claims, **characterized in that** the positioning elements (53, 54, 63, 64, 65) are operated by means of compressed air and are designed as hollow spaces (53, 63) in an elastic material (54, 64), wherein compressed air can be introduced into said hollow spaces (53, 63) via control valves (55) governed by the controlling device (8).

13. The conveying device (1) according to Claim 12, **characterized in that** the hollow spaces (63) are designed as bellows (65).

14. The conveying device (1) according to any one of the preceding claims, **characterized in that**, at least in their region engaging the conveying membrane (62, 72, 82), the positioning elements (63, 64, 65, 73, 83) are designed such that they follow the tilt movement of the membrane (62, 72, 82).

15. The conveying device (1) according to any one of the preceding claims, **characterized in that** the positioning elements (3, 53, 54, 63, 64, 65, 73, 83) form the vibration means.

16. The conveying device (1) according to any one of the preceding claims, **characterized in that** the positioning elements (53, 54, 63, 64, 65, 73, 83) are designed such that they can be controlled in the amplitude of their deflection.

17. The conveying device (1) according to any one of the preceding claims, **characterized in that** object detecting means (12) are provided for detecting particularly the type, size and/or position of objects (6) to be conveyed, said object detecting means (12) being connected to the controlling device (8) in a communicating manner.

18. The conveying device (1) according to any one of the preceding claims, **characterized in that** the controlling device (8) includes an interface (13) via which the conveying device (1) can be connected to other conveying devices (1) according to the preceding claims or any other conveying means desired.

## Revendications

1. Dispositif de transport (1) pour transporter, trier et/ou manipuler des objets (6), avec une membrane de transport (2, 52, 62, 72, 82) plane de conformation élastiquement déformable définissant un plan de transport, avec plusieurs actionneurs (3, 53, 54, 63, 64, 65, 73, 83) commandés par un dispositif de commande (8) et agencés sous le plan de transport et sous la membrane de transport (2, 52, 62, 72, 82) de façon telle que le mouvement des actionneurs (3, 53, 54, 63, 64, 65, 73, 83) entraîne une déflexion de la membrane de transport (2, 52, 62, 72, 82) par l'actionneur (3, 53, 54, 63, 64, 65, 73, 83) selon une direction essentiellement perpendiculaire au plan de transport, **caractérisé en ce que** les actionneurs (3, 53, 54, 63, 64, 65, 73, 83) sont agencés selon les noeuds d'un réseau de façon à en avoir une répartition essentiellement régulière par rapport à la surface de la membrane (2, 52, 62, 72, 82) et de sorte que plusieurs actionneurs (3, 53, 54, 63, 64, 65, 73, 83) se trouvent l'un derrière l'autre dans la direction de transport et le plan de transport, et **en ce que** le dispositif de commande (8) est conçu de façon à assurer une action coordonnée de groupes d'actionneurs (3, 53, 54, 63, 64, 65, 73, 83) pour déplacer un objet (6), des organes de vibration (3, 53, 54, 63, 64, 65, 73, 83) étant prévus pour obtenir une vibration d'au moins certaines parties de la membrane (2, 52, 62, 72, 82) et/ou les actionneurs (53, 54, 63, 64, 65) opérant au moyen d'air comprimé et un dispositif d'alimentation en air comprimé (11) étant relié aux actionneurs (53, 54, 63, 64, 65) et la membrane de transport (62) présentant des buses d'éjection alimentées en air comprimé par le dispositif d'alimentation en air comprimé (11).

2. Dispositif de transport (1) selon la revendication 1, **caractérisé en ce que** le plan de transport de la membrane de transport (2, 52, 62, 72, 82) s'étend selon un plan essentiellement horizontal.

3. Dispositif de transport selon la revendication 1 ou 2, **caractérisé en ce que** le dispositif de commande (8) est conçu de façon à commander, dans un mode de levage/d'abaissement, le mouvement synchrone au moins des actionneurs (3, 53, 54, 63, 64, 65, 73, 83) agencés dans une zone latérale de la membrane de transport (2, 52, 62, 72, 82) et, par là, le levage ou l'abaissement vertical d'au moins cette partie latérale de la membrane (2, 52, 62, 72, 82), et notamment de commander le mouvement synchrone de tous les actionneurs (3, 53, 54, 63, 64, 65, 73, 83) et, par là, le levage ou l'abaissement vertical de l'ensemble de la membrane (2, 52, 62, 72, 82).

4. Dispositif de transport (1) selon l'une des revendications précédentes, **caractérisé en ce que** tous les actionneurs (3, 53, 54, 63, 64, 65, 73, 83) sont de construction identique.

5. Dispositif de transport (1) selon l'une des revendications précédentes, **caractérisé en ce que** les actionneurs sont réalisés sous forme d'acteurs (53, 54, 63, 64,65, 83) à action unilatérale.

6. Dispositif de transport (1) selon l'une des revendications précédentes, **caractérisé en ce que** des éléments élastiques (90) agissent sur la membrane de transport (82) de manière à y appliquer une force de rappel lors de la déflexion de la membrane de transport (82).

7. Dispositif de transport (1) selon l'une des revendications précédentes, **caractérisé en ce que** la membrane (2, 52, 62, 72, 82) repose sur les actionneurs (3, 53, 54, 63, 64, 65, 73, 83) lorsqu'elle est en position de repos.

8. Dispositif de transport (1) selon l'une des revendications précédentes, **caractérisé en ce que** l'épaisseur de la membrane de transport (72) dans les parties en contact avec les actionneurs (73) est supérieure à celle des parties intermédiaires.

9. Dispositif de transport (1) selon l'une des revendications précédentes, **caractérisé en ce que** la membrane de transport (2, 52, 62, 72, 82) a une surface à faible frottement et résistant à l'usure.

10. Dispositif de transport (1) selon l'une des revendications précédentes, **caractérisé en ce que** la membrane de transport (2, 52, 62, 72, 82) a une structure à plusieurs couches et est composée d'au moins une couche supérieure résistant à l'usure et à faible frottement et d'une couche de support élastique.

11. Dispositif de transport (1) selon la revendication 10, **caractérisé en ce que** les couches de la membrane de transport (2, 52, 62, 72, 82) sont jointes l'une à l'autre de façon amovible et réalisées de façon à pouvoir être interchangées séparément.

12. Dispositif de transport (1) selon l'une des revendications précédentes, **caractérisé en ce que** les actionneurs (53, 54, 63, 64, 65) opèrent au moyen d'air comprimé et sont réalisés sous forme de cavités (53, 63) dans un matériau élastique (54, 64) et dans lesquelles de l'air comprimé peut être injecté par des vannes-pilotes (55) commandées par le dispositif de commande (8).

13. Dispositif de transport (1) selon la revendication 12, **caractérisé en ce que** les cavités (63) sont réalisées sous forme de soufflets (65).

14. Dispositif de transport (1) selon l'une des revendications précédentes, **caractérisé en ce que** les actionneurs (63, 64, 65, 73, 83) sont conçus de façon à suivre, au moins dans leur partie en contact avec la membrane de transport (62, 72, 82), un mouvement d'inclinaison de la membrane (62, 72, 82).

15. Dispositif de transport (1) selon l'une des revendications précédentes, **caractérisé en ce que** les actionneurs (3, 53, 54, 63, 64, 65, 73, 83) forment les organes de vibration.

16. Dispositif de transport (1) selon l'une des revendications précédentes, **caractérisé en ce que** les actionneurs (53, 54, 63, 64, 65, 73, 83) sont conçus de façon à pouvoir en commander l'amplitude de déflexion.

17. Dispositif de transport (1) selon l'une des revendications précédentes, **caractérisé en ce que** sont prévus des moyens de détection d'objets (12) permettant de détecter notamment le type, la taille et/ou la position des objets (6) à transporter et reliés au dispositif de commande (8) de façon à communiquer avec celui-ci.

18. Dispositif de transport (1) selon l'une des revendications précédentes, **caractérisé en ce que** le dispositif de commande (8) présente une interface (13) permettant de connecter le dispositif de transport (1) à d'autres dispositifs de transport (1) réalisés selon les revendications précédentes ou à de quelconques autres moyens de transport.
